# EUROPEAN PATENT SPECIFICATION

(11) **EP 1 900 918 B1**
(45) Date of publication and mention of the grant of the patent: **05.08.2009**
(21) Application number: 06019402.4
(22) Date of filing: 15.09.2006
(51) Int. Cl.: F01N 9/00, F01N 11/00, F02D 41/02

(54) **Particulate filter regeneration method**
Verfahren zur Regeneration eines Partikelfilters
Procédé de régénération de filtre à particules

(43) Date of publication of application: 19.03.2008
(73) Proprietor: GM Global Technology Operations, Inc., Detroit, MI 48265-3000 (US)
(72) Inventor: Barbero, Simone, 10139 Torino (IT); Cassani, Stefano, 10128 Torino (IT); Mercuri, Davide, 10139 Torino (IT)
(74) Representative: Strauss, Peter

(56) References cited:
- EP-A- 1 375 877
- US-A1- 2002 078 684
- US-A1- 2006 179 826

## Description

The present invention relates to a method for operating a particulate filter in the exhaust system of an internal combustion engine.

Filters that reduce emission of particulate matter from Diesel engines have attracted considerable public interest in recent times. Such filters generally comprise a block of porous material through which exhaust gas from the engine flows, whereby particles contained in the exhaust gas are deposited in the pores or at upstream surfaces of the filter block.

When the exhaust gas flows through the filter block, a certain pressure drop is inevitable, but it must be kept as low as possible, on the one side because the pressure drop is equivalent to a force acting on the filter block, which might cause mechanical damage to the filter block if it reaches an excessive value, on the other side, because any positive pressure caused by such a filter at the exhaust side of the engine reduces its efficiency and causes increased fuel consumption.

If particulate matter accumulates in the pores or on the surface of such a filter block or particular top, the pressure drop increases, so that from time to time the accumulated particles must be removed (i.e. the filter has to be regenerated). Conventionally, this is done by heating the filter block to a temperature at which the accumulated particles can be sparked off, which follows a burning of the trapped particulates. For Diesel exhaust particles this light off temperature is around 650°C.

However it should be noted that in case of a strongly particle-loaded or even overloaded filter block the heat created by the burning of the particles may lead to an overheating of the filter block that may crack, melt or damage the filter block, or damage it in other form depending on the nature of the filter substrate.

In order to prevent such negative effects, a timely removal of the particles from the filter substrate must be carried out to avoid an excessive loading of the filter.

A regeneration method and apparatus according to the preambles of independent claims 1 and 12 is disclosed in US2006/0179826 A1. According to this document, if a threshold is exceeded, regeneration is carried out without considering the current operating conditions of the engine. Accordingly, the threshold must be set low enough to exclude any danger of overheating the filter during regeneration.

EP 1 375 877 discloses a method for filter regeneration in which, if it has been decided to regenerate the filter, a method for heating the filter to a temperature where regeneration can take place is selected depending on operating conditions of the engine. The amount of fuel needed for reaching the regeneration temperature is thus variable according to operating conditions.

It is the object of the present invention to provide a method for operating a particulate filter in the exhaust system of an internal combustion engine which is more efficient and at the same time reliably avoids thermal damage to the filter.

This object is achieved by a method as defined in claim 1. Regeneration may not be appropriate under any kind of driving condition. Therefore, according to the invention, at least one of steps c) and e) defined in claim 1 comprises the following sub-steps:
- deciding that the filter is to be regenerated if the threshold is exceeded,
- judging whether current load parameter values of the engine are suitable for a regeneration, and
- carrying out the regeneration when the load parameter values are found suitable.

In order to simplify the judgment, a plurality of regions are defined in a load parameter space (load parameter characteristics) of the engine, an upper limit of the estimate of the quantity of particulate matter or of the flow resistance is defined for each of said regions, and load parameter values are judged to be unsuitable if the estimation of the quantity of particulate matter or the flow resistance is above the upper limit associated to the region to which said parameter values belong.

The flow resistance in the filter can be determined conveniently based on the mass flow through the filter and the pressure drop measured at the filter. An air flow sensor is present in the intake manifold of most modern cars and can be used for that purpose without extra costs. In a first assumption the mass flow through the filter can be approximated by the intake fresh air flow into the engine. This assumption can be further improved, if in addition to the fresh air flow the amount of fuel injected is taken into account.

In order to avoid unnecessary regenerations due to short-term fluctuations of the measured values of air flow, pressure drop etc., the flow resistance is preferably low-pass filtered in step e) before being compared to the second threshold.

The reliability of the method can be further improved by measuring, in step e), the time in which the flow resistance is above the second threshold, and starting the regeneration of the filter only when the accumulated time exceeds a third threshold.

In order to prevent undue delay of the regeneration, the accumulated time should be kept stored while the engine is temporarily off.

It is also favourable to count the number of regenerations due to excessive flow resistance and to generate a warning signal the car driver if this number exceeds a fourth threshold. The signal shows the driver or operator that there might be a malfunction of the engine or the filter, which should be mended before it causes serious damages.

The judging step should preferably take into account an estimation of the particulate quantity collected in the filter or substrate or the flow resistance at the time of judging. While a certain amount of trapped particulates in the filter may still allow safe regeneration of the particle filter, if the engine is running at high speed, the same amount on the contrary may lead to an overheat situation within the filter if the engine is running at low speed.

Further features and advantages of the invention will become apparent from the detailed description of embodiments thereof referring to the appended drawings.
- Fig. 1: is a diagram view of a combustion engine in which the present invention is implemented;
- Fig. 2: is a diagram of a load parameter space of the engine;
- Fig. 3: illustrates an example of the development of soot load and flow resistance in the particulate filter of Fig. 1;
- Fig. 4: is a block diagram of part of the logical structure of the electronic control unit shown in Fig. 1;
- Fig. 5: is a block diagram of the flow resistance monitoring unit of Fig. 4; and
- Fig. 6: is a block diagram of part of the logical structure of the electronic control unit according to a second embodiment.

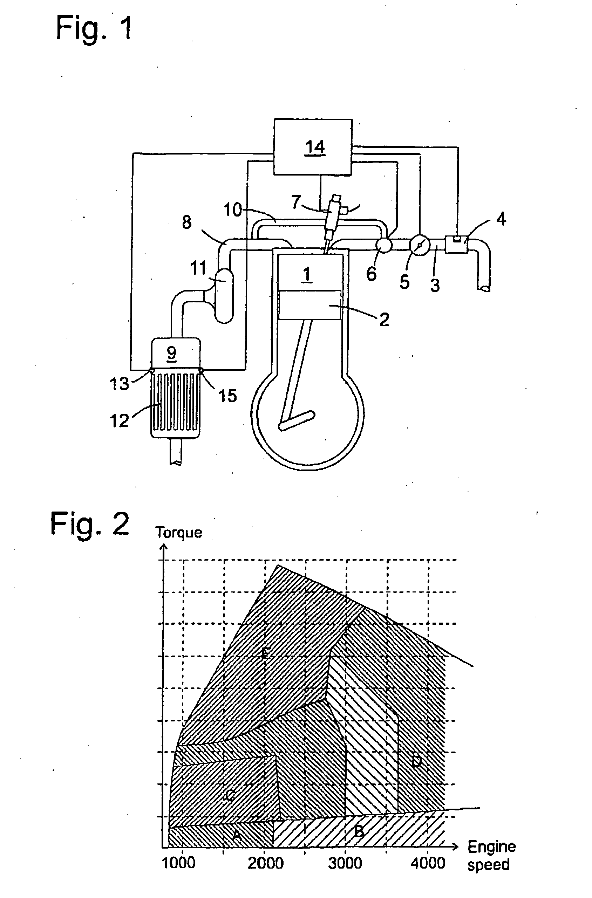

Fig. 1 schematically illustrates a Diesel engine and its exhaust system, to which the present invention is applicable. The engine has one or more cylinder comprising combustion chambers 1 in which a piston 2 reciprocates, and to which fresh air is supplied by an intake manifold 3. Along the intake manifold 3, there is located an airflow meter 4, a throttle valve 5 and an exhaust gas recirculation (EGR) valve 6. A fuel injection valve 7 is connected to a common rail, not shown.

An exhaust duct 8 extends from the combustion chambers 1 to an exhaust catalyst 9. An exhaust recirculation line 10 extends from exhaust duct 8 to EGR valve 6. A turbine 11 for driving an intake air compressor, not shown, may be located in exhaust duct 8.

In the schematic representation of Fig. 1, the exhaust catalyst 9 is represented as a single block. In practice, it may be divided into at least two separate units, a pre-catalyst which is small-sized and located physically close to the engine in order to reach operating temperature quickly after engine start-up, and a main catalyst located further downstream, of larger size and capable of processing the exhaust gas from the engine without overheating even at high engine loads.

Catalyst 9 degrades residual hydrocarbons, nitric oxides and carbon monoxide contained in the exhaust stream. Particles such as soot contained in the exhaust stream pass catalyst 9 essentially unaffected.

A particulate filter 12 is located downstream of catalyst 9 for collecting these particles from the exhaust stream. Particulate filter 12 is placed in a common housing together with the main catalyst. This allows the particulate filter 12 to be heated by the exothermal reactions initiated by the catalyst 9.

Particulate filter 12 comprises a body of porous material into which dead-end holes extend from upstream and downstream sides thereof, respectively. When the engine is running, soot particles are at first collected within the pores of the filter material, and, in a later stage, a layer of collected particles begins to build up on the walls of the upstream holes.

An electronic control unit (ECU) 14 controls for instance the injector 7 and the amount of fuel injected into the combustion chamber, the positioning of throttle valve 5 and via EGR valve 6 the amount of exhaust gas recirculated based on an air flow rate detected at the air flow meter 4; the engine speed; the accelerator pedal position; etc. Since these functions of the ECU 14 are well known in the art, they must not be described further here.

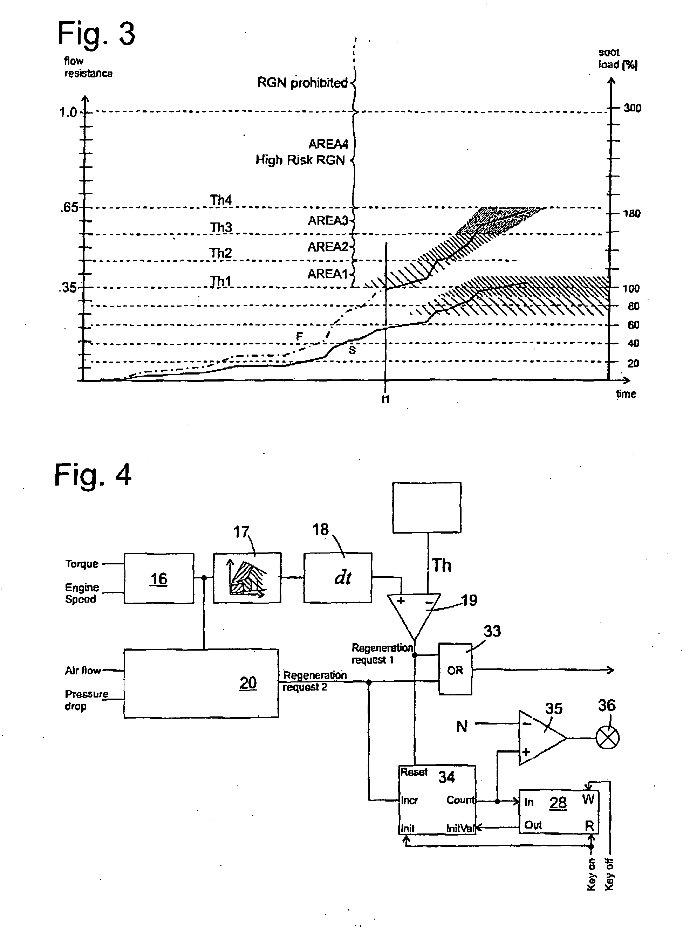

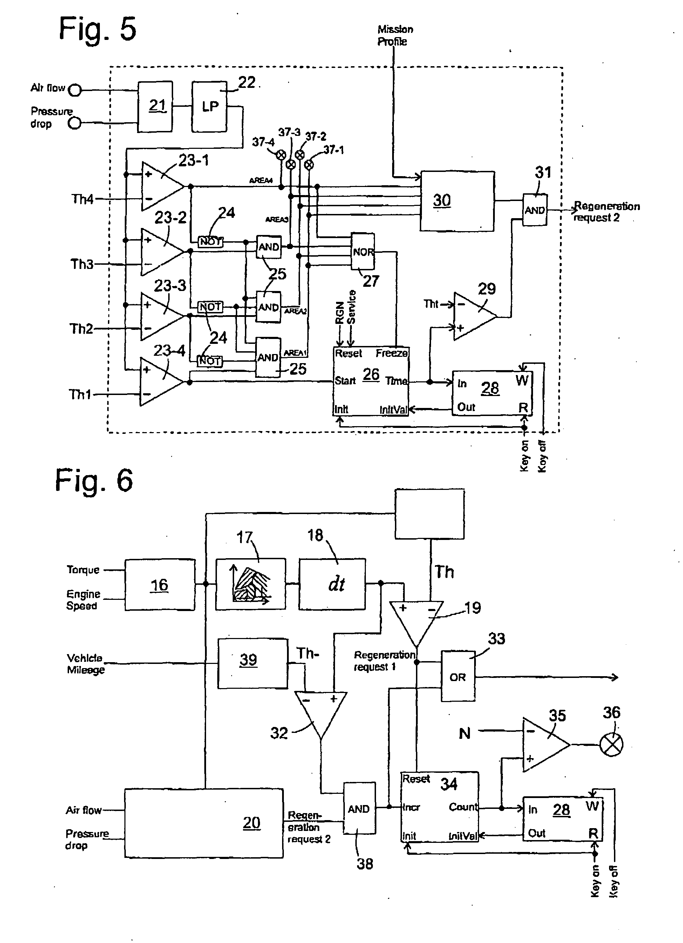

A pressure drop sensor 13 is located at the upstream side of filter 12 and is connected to ECU 14. Processing of pressure drop signals of sensor 13 by ECU 14 will be explained in more detail connection with Fig. 4 and 5. These Figs. illustrate electronic structure and operation of a portion of ECU 14 by means of discrete circuit components. It should be understood by a skilled person that some or all of these circuit components may be implemented by software executed in an appropriate microprocessor system or the like.

A temperature sensor 15 is placed at an upstream side of particulate filter 12 and is connected to ECU 14.

The ECU 14 comprises a mission profile detection unit 16 (see Fig. 4) which continuously receives of load parameter values such as torque and speed from the engine and determines, based on these data and their fluctuations, a current engine profile. Fig. 2 illustrates examples of mission profiles of various driving situations. In the profile the different driving situations are mapped by speed-torque characteristic lines dependence.

In Fig. 2 profile A corresponds to the vehicle standing still or coasting slowly, e.g. when standing in front of a traffic light or in a traffic jam; mission profile B corresponds to an engine brake mode, C to slow driving in an urban environment, D to extra-urban highway driving and E to uphill driving. All these mission profiles have characteristic soot emission rates which are stored in a table 17 (Fig 4) and which are typical for a specific driver.

Table 17 is addressed using the mission profile detected by unit 16, and the output of table 17 representing the soot emission rate associated to the respective mission profile is integrated over time in integrator 18.

After each regeneration cycle of particulate filter 12, the integrator 18 is reset to a residual soot quantity which is expected to remain in the filter. Ideally, this residual soot quantity would be zero, but in practice, a non-zero residue remains even after a complete regeneration cycle which depends essentially on the mission profile. Moreover, a substantial soot quantity may remain in the filter, if the regeneration is not carried out completely in case for instance the engine is turned off, before regeneration is completed. The ECU determines this quantity based on parameters such as regeneration temperature profile of the filter, mission profile of the vehicle etc. Thus, the output signal of integrator 18 represents an estimation of the quantity of soot collected in filter 12 at any time. A comparator 19 compares the output of integrator 18 with a predetermined soot quantity threshold Th representing the limit at which the filter 12 should be regenerated, and outputs a regeneration request signal as soon as the output of integrator 18 exceeds threshold Th. It should be noted that threshold Th is not a constant but depends on the current mission profile. E.g. Th may for example be lower for mission profile D than for any other mission profile. Therefore a soot load which may not yet be high enough for regeneration in another mission profile may well trigger a regeneration cycle as soon as mission profile D, being particularly suited for regeneration, is reached and detected, respectively. Components 16 to 19 thus form a first unit for judging the need for regeneration.

In parallel to this judging unit, a flow resistance monitoring unit 20 is provided, the detailed structure of which is explained referring to Fig. 5. It comprises a calculating unit 21 for determining the flow resistance of filler 12 based on pressure drop data from sensor 13, air flow data from air flow meter 4 and, if desired, fuel injection rate data. Flow resistance data continuously calculated by unit 21 are supplied to a low-pass filter 22 which suppresses short-time artefacts in the flow resistance data which may result from a variation of the engine load which may affect the air flow and the pressure drop at different times.

A low-pass filtered flow resistance signal from filter 22 is supplied to four comparators 23-1, 23-2, 23-3, 23-4 to compare it with one of the thresholds Th1, Th2, Th3, and Th4. The four thresholds have a relation Th1<Th2<Th3<Th4. Each of the threshold representing a different degree of regeneration urgency that increases from threshold Th1 to threshold Th4.

The four thresholds may e.g. related to flow resistances of 0.35, 0.45, 0.55 and 0.65 hPa/(m³/h), or equivalently to load level, as percentage of load e.g. approx. 100%, 130%, 160% and 180% of a soot load at which regeneration is required or at least recommended. The outputs of the four comparators 23-1 to 23-4 have a logical level 'TRUE' whenever the filtered flow resistance signal exceeds their respective thresholds. From these, a logical circuit formed of inverters 24 and AND gates 25 forms signals AREA1, AREA2, AREA3, AREA4 which have 'TRUE' level only in cases of the filtered flow resistance signal being between Th1 and Th2, between Th2 and Th3, between Th3 and Th4 or above Th4, respectively.

A timer circuit 26 has a start input connected to the output of comparator 23-1, causing the timer circuit 26 to start counting time whenever the output of comparator 23-1 switches to 'TRUE' level. A NOR gate 27 has signals AREA1, AREA2, AREA3, AREA4 applied to its inputs and an output connected to a 'Freeze' input of timer circuit 26, causing the timer circuit 26 to stop whenever none of signals AREA1 to AREA4 is 'TRUE'. The timer circuit 26 is reset to zero by a signal RGN which indicates that a regeneration of filter 12 has been started, or by service operations. The timer circuit 26 thus measures the total time in which the filtered flow resistance signal has exceeded threshold Th1 since the last regeneration. This time value is output to an EEPROM storage 28 and to a comparator 29. EEPROM 28 is adapted to store the timer value when triggered by an external signal 'Key off' which indicates that the vehicle is being switched off, so that in the time in which timer circuit 26 receives no supply voltage, the timer value is saved in EEPROM 28. A signal 'Key on' which indicates that the vehicle is being switched on again triggers EEPROM 28 to output the stored timer value and timer circuit 26 to resume operation with the timer value read from EEPROM 28.

Comparator 29 compares the timer value to a further threshold Tht and issues a 'TRUE' level when Tht is exceeded.

The signals AREA1 to AREA4 are supplied to a mission profile check unit 30 which further receives a mission profile signal from unit 16. Mission profile check unit 30 checks based on a set of predetermined rules whether a regeneration can be admitted at the time being in view of the current soot load represented by the signals AREA1 to AREA4. If the vehicle is determined to be in highway mission profile D by unit 16, check unit 30 allows regeneration by outputting a 'TRUE' signal regardless of which one of signals AREA1 to AREA4 is 'TRUE'. In case of other mission profiles, regeneration may be allowed if AREA1, AREA2, or AREA3 is 'TRUE', but not if AREA4 is 'TRUE'.

Output signals of mission profile check unit 30 and comparator 29 are supplied to an AND gate 31 which outputs a regeneration request signal if the output of comparator 29 is 'TRUE' and regeneration is allowed by check unit 30.

As can be seen in Fig. 4, the two regeneration request signals from comparator 19 and from flow resistance monitoring unit 20 are combined in an OR gate 33, so that a regeneration request signal is output whenever one of these two units finds a regeneration necessary. If a regeneration request is output by OR gate 33, a regeneration procedure is launched.

Launching of the regeneration may mean that heating of the filter is immediately started. According to a preferred alternative, the ECU 14 waits for an engine cut-off (zero torque condition) and starts to heat the filter then, in order to keep the impact on driveability small. Only if the engine cut-off is not detected within a predetermined time after the regeneration request, the ECU 14 starts to heat the filter 12 unconditionally.

The regeneration request signal from flow resistance monitoring unit 20 is further applied to an incrementing input of a counter 34, a reset input of which is connected to the output of comparator 19. The counting value in counter 34 thus corresponds to the number of regenerations having consecutively been triggered by unit 20. Just like the timer value of timer 26, the counting value of counter 34 is applied to EEPROM 28 for storing therein when the vehicle is switched of and reading back into counter 34 when it is switched on again. Further, the counting value is applied to an input of a comparator 35, the other input of which is connected to a threshold signal N. Whenever the counting value exceeds the threshold N, comparator 35 lights a control indicator 36 in the dashboard of the vehicle, whereby the driver is informed that a regeneration of the particulate filter 12 has been triggered N times consecutively by excessive pressure drop, indicating a probable malfunction of particulate filter 12.

It may be useful to provide at the vehicle dashboard control indicators 37-1 to 37-4 connected to the outputs of comparators 23-1 to 23-4, respectively, as shown in Fig. 4, or to signals AREA1 to AREA4 for informing the driver of an excessive pressure drop. If directly connected to the comparators 23-1 to 23-4, the control indicators 37-1 to 37-4 will light up one after the other when the flow resistance increases, so as to become more and more conspicuous. If the driver sees the control indicators 37-1 to 37-4 light up, he/she may react by bringing the vehicle into highway mission profile D, so that regeneration will be allowed by mission profile check unit 30.

Fig. 3 further illustrates the effect of the invention based on a diagram showing a possible development of the soot load in filter 12. The ordinate axis of the diagram represents the time elapsed since the last regeneration, the left-hand abscissa indicates the flow resistance as output by low-pass filter 22, and the right-hand abscissa gives the soot load calculated by integrator 18. The scales of the two abscissas are chosen so that valued of the flow resistance and of the soot load plotted at the same level at the two abscissas correspond to each other, so that when the soot generation is normal, plots of the flow resistance and of the calculated soot load as a function of time should be congruent. When the soot load is high, e.g. above 100%, it is reliably correlated to the flow resistance according to the scale shown in Fig. 3. At low soot loads, the correlation is not reliable. Therefore, although the solid curve S representative of the soot load calculated by integrator 18 differs from dash-dot curve F representing the flow resistance, it cannot be reliably concluded from this discrepancy that the soot generation is anomalously high while the soot load is still low. Such a discrepancy may occur due to various reasons, e.g. a malfunction of the engine causing it to emit more soot than usual, overheating of the filter in the past, by which its pore structure has been modified, incomplete regeneration, or others.

When the flow resistance is high enough to be reliably representative of the soot load, after an instant t1, which is symbolized by the curve F being drawn as a solid line after t1, the soot load is already in a range close to 100%, where a regeneration may be dangerous for the filter 12 under certain mission profiles. As long as the flow resistance is in the range of AREA1, regeneration only has to be prohibited for the most critical mission profile; when passing to AREA2 or AREA3, the number of mission profiles for which regeneration cannot be allowed increases. By taking account of the mission profile in this way, regeneration becomes possible even at rather high soot loads which might conventionally only be removed in a service station.

According to the present method, the filter regeneration in a service station becomes compulsory only if threshold Th4 is exceeded, above which regeneration is not safe anymore for any mission profile.

Fig. 6 is a block diagram analogous to Fig. 4 according to a further embodiment of the invention. It differs from the embodiment of Fig. 4 by an AND gate 38 inserted between the output of flow resistance monitoring unit 20 and the input of OR gate 33. AND gate 38 has one of its inputs connected to a comparator 32. The comparator 32, in turn, has its inputs connected to the output of integrator 18 and to an output of threshold generator 39 providing a threshold signal Th-. The threshold generator 39 may be formed by a read-only-memory addressed by a total mileage count of the vehicle. The threshold generator 39 stores a characteristic which has low values in the range of 20 to 25% for mileages of 1000 or below and which converges towards a value slightly less than the lowest threshold Th, e.g. approx. 80%, with increasing mileage.

The function of AND gate 38, comparator 32 and threshold generator 39 is to prevent regeneration in case that unit 20 generates an erroneous regeneration request, e.g. due to a malfunction of pressure drop sensor 15, to a blocking of filter 12 that cannot be removed by regeneration etc. In practice, AND gate 38 will suppress a regeneration request from unit 20 if the calculated soot quantity is below the threshold output by threshold generator 39. When the engine is new, its soot generation rate can be much higher than the rates recorded in table 17, so that the soot quantity calculated by integrator 19 tends to be lower than the true value, and the filter may be critically congested although the calculated soot quantity is still far below threshold Th. Under these circumstances, frequent regenerations may be triggered based on flow resistance by flow resistance monitoring unit 20, so that a critical amount of soot cannot accumulate in the filter 12. When the engine ages, its soot emission rates will gradually approach those of table 17, so that threshold TH- may be increased in order to reliably avoid unnecessary regenerations.

## Claims

1. A method for operating a particulate filter (12) in the exhaust system of an internal combustion engine, wherein
a) particulate emission of the engine is estimated based on load parameters of the engine,
b) the estimated particulate emission is integrated to obtain an estimate of an amount of particulate matter accumulated in the filter,
c) the filter is regenerated if the estimated amount of particulate matter exceeds a first threshold (Th),
d) the flow resistance of the particulate filter (12) is determined, and
e) the filter is regenerated if the flow resistance exceeds a second threshold (Th1, Th2, Th3, Th4),
wherein at least one of steps c) and e) comprises the substep of
- deciding that the filter is to be regenerated if the threshold is exceeded,
**characterized in that**
a plurality of regions (A, B, C, D, E) is defined in a load parameter space of the engine, an upper limit (Th1, Th2, Th3, Th4) of the estimate of the amount of particulate matter or of the flow resistance is defined for each of said regions,
said at least one of steps c) and e) further comprises the substeps of
- judging whether current load parameter values of the engine are suitable for a regeneration, the load parameter values being judged to be unsuitable if the estimate of the amount of particulate matter or the flow resistance is above the upper limit associated to the region (A, B, C, D, E) to which said parameter values belong, and
- carrying out the regeneration when the load parameter values are found suitable.

2. The method of claim 1, wherein said first threshold (Th) is determined based on load parameter values of the engine.

3. The method of claim 1 or 2, wherein the flow resistance is determined based on the fresh air flow of the engine and a pressure drop measured at said filter.

4. The method of claim 3, wherein the flow resistance is determined further based on the amount of fuel supplied to the engine.

5. The method of one of the preceding claims, wherein in step e) the flow resistance is low-pass filtered (22) before comparing to the second threshold (Th1, Th2, Th3, Th4).

6. The method of one of the preceding claims, wherein in step e) the time in which the flow resistance is above the second threshold (Th1) is measured (26), and regeneration of the filter (12) is started when the accumulated time exceeds a third threshold (Tht).

7. The method of claim 6, wherein the mesured time is kept stored (28) while the engine is off.

8. The method of one of the preceding claims, wherein the number of regenerations due to excessive flow resistance is counted (34), and a warning is generated (36) when this number exceeds a fourth threshold (N).

9. The method of one of the preceding claims, wherein the judging step takes account of an estimate of the amount of particulate matter or of the flow resistance at the time of judging.

10. The method of one of the preceding claims, wherein in step e) the estimated amount of particulate matter is compared to a fifth threshold (Th-) and the filter regeneration of step e) is carried out only if the estimated amount of particulate matter exceeds said fifth threshold (Th-).

11. The method of claim 10, wherein the fifth threshold (Th- ) increases over the lifetime of the filter (12).

12. An apparatus for controlling regeneration of a particulate filter (12) in the exhaust system of an internal combustion engine, comprising
a) means (16, 17) for estimating particulate emission of the engine based on load parameters of the engine,
b) means (18) for integrating the estimated particulate emission to obtain an estimate of an amount of particulate matter accumulated in the filter,
c) means (19) for deciding that the filter is to be regenerated if the estimated amount of particulate matter exceeds a first threshold (Th),
d) means (4, 13, 21) for determining the flow resistance of the particulate filter (12), and
e) means (26-31) for deciding that the filter is to be regenerated if the flow resistance exceeds a second threshold (Th1, Th2, Th3, Th4),
**characterized in that**
a plurality of regions (A, B, C, D, E) is defined in a load parameter space of the engine, an upper limit (Th1, Th2, Th3, Th4) of the estimate of the amount of particulate matter or of the flow resistance is defined for each of said regions, and
said at least one of said means (19; 26-31) for deciding is adapted
- to judge, if it has decided to regenerate, whether current load parameter values of the engine are suitable for a regeneration, the load parameter values being judged to be unsuitable if the estimate of the amount of particulate matter or the flow resistance is above the upper limit associated to the region (A, B, C, D, E) to which said parameter values belong, and
- to carry out the regeneration when the load parameter values are found suitable.

## Patentansprüche

1. Verfahren zum Betreiben eines Partikelfilters (12) im Auspuffsystem eines Verbrennungsmotors, wobei
a) die Partikelemission des Motors auf der Basis von Lastparametern des Motors geschätzt wird,
b) die geschätzte Partikelemission integriert wird, um eine Schätzung für eine Partikelmenge zu erhalten, die in dem Filter angesammelt ist,
c) der Filter regeneriert wird, wenn die geschätzte Partikelmenge eine erste Schwelle (Th) übersteigt,
d) der Strömungswiderstand des Partikelfilters (12) bestimmt wird, und
e) der Filter regeneriert wird, wenn der Strömungswiderstand eine zweite Schwelle (Th1, Th2, Th3, Th4) übersteigt,
wobei mindestens einer der Schritte c) und e) folgenden Unterschritt umfasst:
- Entscheiden, dass der Filter zu regenerieren ist, wenn die Schwelle überschritten wird,
**dadurch gekennzeichnet, dass**
eine Mehrzahl von Bereichen (A, B, C, D, E) in einem Lastparameterraum des Motors definiert wird und eine Obergrenze (Th1, Th2, Th3, Th4) der Schätzung der Partikelmenge oder des Strömungswiderstands für jeden der Bereiche definiert wird,
wobei mindestens einer der Schritte c) und e) darüber hinaus folgende Unterschritte umfasst:
- Beurteilen, ob die aktuellen Lastparameterwerte des Motors für eine Regeneration geeignet sind, wobei die Lastparameterwerte als ungeeignet beurteilt werden, wenn die Schätzung der Partikelmenge oder des Strömurigswiderstands über der Obergrenze liegt, die dem Bereich (A, B, C, D, E) zugeordnet wurde, zu dem die Parameterwerte gehören, und
- Durchführen der Regeneration, wenn die Lastparameter als geeignet beurteilt wurden.

2. Verfahren nach Anspruch 1, wobei die erste Schwelle (Th) auf der Basis von Lastparameterwerten des Motors bestimmt wird.

3. Verfahren nach Anspruch 1 oder 2, wobei der Strömungswiderstand auf der Basis des Frischluftstroms des Motors und eines an dem Filter gemessenen Druckabfalls bestimmt wird.

4. Verfahren nach Anspruch 3, wobei der Strömungswiderstand darüber hinaus auf der Basis der Kraftstoffmenge bestimmt wird, die dem Motor zugeführt wird.

5. Verfahren nach einem der vorhergehenden Ansprüche,
wobei im Schritt e) der Strömungswiderstand tiefpassgefiltert (22) wird, bevor er mit der zweiten Schwelle (Th1, Th2, Th3, Th4) verglichen wird.

6. Verfahren nach einem der vorhergehenden Ansprüche,
wobei im Schritt e) die Zeit, in der der Strömungswiderstand über der zweiten Schwelle (Th1) liegt, gemessen wird (26), und die Regeneration des Filters (12) gestartet wird, wenn die akkumulierte Zeit eine dritte Schwelle (Tht) übersteigt.

7. Verfahren nach Anspruch 6, wobei die gemessene Zeit gespeichert wird (28), während der Motor ausgeschaltet ist.

8. Verfahren nach einem der vorhergehenden Ansprüche,
wobei die Anzahl der Regenerationen aufgrund eines übermäßigen Strömungswiderstands gezählt wird (34) und eine Warnung generiert wird (36), wenn diese Anzahl eine vierte Schwelle (N) übersteigt.

9. Verfahren nach einem der vorhergehenden Ansprüche,
wobei der Beurteilungsschritt eine Schätzung der Partikelmenge oder des Strömungswiderstands zum Zeitpunkt der Beurteilung einbezieht.

10. Verfahren nach einem der vorhergehenden Ansprüche,
wobei im Schritt e) die geschätzte Partikelmenge mit einer fünften Schwelle (Th-) verglichen wird und die Filterregeneration des Schritts e) nur durchgeführt wird, wenn die geschätzte Partikelmenge die fünfte Schwelle (Th-) übersteigt.

11. Verfahren nach Anspruch 10, wobei die fünfte Schwelle (Th-) über die Lebenszeit des Filters (12) steigt.

12. Vorrichtung zur Steuerung der Regeneration eines Partikelfilters (12) im Auspuffsystem eines Verbrennungsmotors, umfassend
a) Mittel (16, 17) zur Schätzung der Partikelemission des Motors auf der Basis von Lastparametern des Motors,
b) Mittel (18) zur Integration der geschätzten Partikelemission, um eine Schätzung einer Partikelmenge zu erhalten, die in dem Filter angesammelt ist,
c) Mittel (19), um zu entscheiden, dass der Filter zu regenerieren ist, wenn die geschätzte Partikelmenge eine erste Schwelle (Th) übersteigt,
d) Mittel (4, 13, 21) zum Bestimmen des Strömungswiderstands des Partikelfilters (12), und
e) Mittel (26-31), um zu entscheiden, dass der Filter zu regenerieren ist, wenn der Strömungswiderstand eine zweite Schwelle (Th1, Th2, Th3, Th4) übersteigt,
**dadurch gekennzeichnet, dass**
eine Vielzahl von Bereichen (A, B, C, D, E) in einem Lastparameterraum des Motors definiert wird und eine Obergrenze (Th1, Th2, Th3, Th4) der Schätzung der Partikelmenge oder des Strömungswiderstands für jeden der Bereiche definiert wird, und
mindestens eines der Entscheidungsmittel (19; 26-31) geeignet ist,
- zu beurteilen, wenn es entschieden hat zu regenerieren, ob die aktuellen Lastparameterwerte des Motors für eine Regeneration geeignet sind, wobei die Lastparameterwerte als ungeeignet beurteilt werden, wenn die Schätzung der Partikelmenge oder des Strömungswiderstands über der Obergrenze liegt, die dem Bereich (A, B, C, D, E) zugeordnet wurde, zu dem die Parameterwerte gehören, und
- die Regeneration durchzuführen, wenn die Lastparameter als geeignet beurteilt wurden.

## Revendications

1. Procédé pour faire fonctionner un filtre à particules (12) dans le système d'échappement d'un moteur à combustion interne, dans lequel
a) les émissions de particules par le moteur sont calculées à partir de paramètres de charge du moteur,
b) les émissions de particules estimées sont intégrées pour obtenir une estimation d'une quantité de particules accumulée dans le filtre,
c) le filtre est régénéré si la quantité estimée de particules dépasse un premier seuil (Th),
d) la résistance à l'écoulement du filtre à particules (12) est déterminée, et
e) le filtre est régénéré si la résistance à l'écoulement dépasse un deuxième seuil (Th1, Th2, Th3, Th4),
dans lequel l'une au moins des étapes c) et e) comprend la sous-étape de
- décision du fait que le filtre doit être régénéré si le seuil est dépassé,
**caractérisé en ce qu'**une pluralité de régions (A, B, C, D, E) est définie dans un espace de paramètres de charge du moteur, une limite (Th1, Th2, Th3, Th4) de l'estimation de la quantité de particules ou de la résistance à l'écoulement est définie pour chacune desdites régions,
ladite au moins une des étapes c) et e) comprend en outre les sous-étapes de
- jugement du fait que les valeurs de paramètres de charge actuelles du moteur conviennent pour une régénération, les valeurs de paramètres de charge étant jugées inadéquates si l'estimation de la quantité de particules ou la résistance à l'écoulement dépasse la limite supérieure associée à la région (A, B, C, D, E) à laquelle appartiennent lesdites valeurs de paramètres, et
- exécution de la régénération quand les valeurs de paramètres de charge sont jugées adéquates.

2. Procédé selon la revendication 1, dans lequel ledit premier seuil (Th) est déterminé sur la base des valeurs de paramètres de charge du moteur.

3. Procédé selon la revendication 1 ou 2, dans lequel la résistance à l'écoulement est déterminée sur la base du débit d'air frais du moteur et d'une baisse de pression mesurée au niveau dudit filtre.

4. Procédé selon la revendication 3 dans lequel la résistance à l'écoulement est déterminée en outre sur la base de la quantité de carburant fournie au moteur.

5. Procédé selon l'une des revendications précédentes, dans lequel, dans l'étape e), la résistance à l'écoulement est filtrée en passe-bas (22) avant d'être comparée au deuxième seuil (Th1, Th2, Th3, Th4).

6. Procédé selon l'une des revendications précédentes, dans lequel, dans l'étape e), le temps pendant lequel la résistance à l'écoulement dépasse le deuxième seuil (Th1) est mesuré (26), et la régénération du filtre (12) est lancée quand le temps cumulé dépasse un troisième seuil (Tht).

7. Procédé selon la revendication 6, dans lequel le temps mesuré est conservé en mémoire (28) pendant que le moteur est arrêté.

8. Procédé selon l'une des revendications précédentes, dans lequel le nombre de régénérations résultant d'une résistance excessive à l'écoulement est compté (34) et un avertissement est généré (36) quand ce nombre dépasse un quatrième seuil (N).

9. Procédé selon l'une des revendications précédentes, dans lequel l'étape de jugement tient compte d'une estimation de la quantité de particules ou de la résistance à l'écoulement au moment du jugement.

10. Procédé selon l'une des revendications précédentes, dans lequel, dans l'étape e), la quantité estimée de particules est comparée à un cinquième seuil (Th-) et la régénération du filtre dans l'étape e) n'est exécutée que si la quantité estimée de particules dépasse ledit cinquième seuil (Th-).

11. Procédé selon la revendication 10, dans lequel le cinquième seuil (Th-) augmente avec la durée de vie du filtre (12).

12. Appareil pour contrôler la régénération d'un filtre à particules (12) dans le système d'échappement d'un moteur à combustion interne, comprenant
a) des moyens (16, 17) pour estimer les émissions de particules du moteur sur la base des paramètres de charge du moteur,
b) des moyens (18) pour intégrer les émissions de particules estimées afin d'obtenir une estimation d'une quantité de particules accumulée dans le filtre,
c) des moyens (19) pour décider que le filtre doit être régénéré si la quantité estimée de particules dépasse un premier seuil (Th),
d) des moyens pour (4, 13, 21) pour déterminer la résistance à l'écoulement du filtre à particules (12), et
e) des moyens (26-31) pour décider que le filtre doit être régénéré si la résistance à l'écoulement dépasse un deuxième seuil (Th1, Th2, Th3, Th4),
**caractérisé en ce qu'**une pluralité de régions (A, B, C, D, E) est définie dans un espace de paramètres de charge du moteur, une limite supérieure (Th1, Th2, Th3, Th4) de l'estimation de la quantité de particules ou de la résistance à l'écoulement est définie pour chacune desdites régions, et
ledit au moins un desdits moyens (19 ; 26-31) de décision est adapté
- pour juger, si une régénération est décidée, si les valeurs de paramètres de charge actuelles du moteur conviennent pour une régénération, les valeurs de paramètres de charge étant jugées inadéquates si l'estimation de la quantité de particules ou la résistance à l'écoulement dépasse la limite supérieure associée à la région (A, B, C, D, E) à laquelle lesdites valeurs de paramètre apparaissent, et
- pour exécuter la régénération quand les valeurs de paramètres de charge sont jugées adéquates.
